# EUROPEAN PATENT SPECIFICATION

(11) **EP 2 925 672 B1**
(45) Date of publication and mention of the grant of the patent: **17.02.2021**
(21) Application number: 13702507.8
(22) Date of filing: 08.01.2013
(51) Int. Cl.: C01G 9/06, C25C 1/16, C22B 3/00, C22B 19/30

(54) **METHOD OF OBTAINING ZINC SULPHATE SOLUTION FOR ELECTROWINNING OF ZINC FROM SELECTED WAELZ OXIDE OF HYDROMETALLURGICAL PROPERTIES**
VERFAHREN ZUR HERSTELLUNG EINER ZINKSULFATLÖSUNG ZUR ELEKTROGEWINNUNG VON ZINK AUS AUSGEWÄHLTEM WÄLZOXID MIT HYDROMETALLURGISCHEN EIGENSCHAFTEN
PROCÉDÉ D'OBTENTION D'UNE SOLUTION DE SULFATE DE ZINC POUR UNE EXTRACTION ÉLECTROLYTIQUE DE ZINC À PARTIR D'OXYDE WAELZ CHOISI DE PROPRIÉTÉS HYDROMÉTALLURGIQUES

(30) Priority: 28.11.2012 EP 12460081
(43) Date of publication of application: 07.10.2015
(73) Proprietor: Zaklady Górniczo-Hutnicze "Boleslaw" S.A., 32-332 Bukowno (PL)
(72) Inventor: FATYGA, Miroslaw, PL-32-300 Olkusz (PL); OCHAB, Boguslaw, PL-32-332 Bukowno (PL); STENCEL, Leszek, PL-32-329 Boleslaw (PL); TREPKA, Andrzej, PL-32-300 Olkusz (PL); PIECZONKA, Bogdan, PL-32-300 Olkusz (PL); ZIEBA, Lukasz, PL-32-329 Boleslaw (PL); NOWAK, Jerzy, PL-32-332 Bukowno (PL); CZEKAJ, Jerzy, PL-32-300 Olkusz (PL); JAKUBOWSKI, Jacek, PL-41-260 Slawków (PL); WYCISLIK, Stanislaw, PL-32-332 Bukowno (PL); SZARY, Andrzej, PL-32-048 Jerzmanowice-Przeginia (PL)
(74) Representative: Lampart, Jerzy
(86) International application number: PCT/PL2013/000003
(87) International publication number: WO 2014/084746

(56) References cited:
- KR-B1- 101 186 170
- DATABASE WPI Week 199528 Thomson Scientific, London, GB; AN 1995-212750 XP002718433, & JP H07 126013 A (KANEKO M) 16 May 1995 (1995-05-16)
- DATABASE WPI Week 197734 Thomson Scientific, London, GB; AN 1977-60091Y XP002718434, & JP S52 82628 A (NISSO SMELTING CO) 11 July 1977 (1977-07-11)

## Description

The object of the invention is a method of obtaining zinc sulphate solution for electrolysis of zinc from selected Waelz oxide of hydrometallurgical properties, applicable in the hydrometallurgical process of electrolytic zinc manufacture.

When steel is produced in an electric furnace using scrap iron as feedstock, about 10-20 kg of dust, called steel-making dust or electric arc furnace dust (EAFD), is generated and separated in the process of furnace flue gas treatment. This dust comprises a mixture of metal oxides that contain Fe, Zn, Pb and other metals, some of which are deemed harmful, such as Cd or Cr, and for this reason the dust in this form is treated as an environmentally hazardous waste. Zinc content in steel-making dust varies in a wide range of from 15 to 35%, and usually zinc is present there in the form of an oxide or ferrate. Dust is lean in zinc content, and it is therefore subjected to Waelz process, wherein the final material is enriched in zinc, and wherein iron and other non-volatile constituents are removed from the dust. Waelz plant comprises a batching station (for preparing charge for the kiln), a rotary kiln, a slag receiving system and a cooling and dust separation system. A standard cooling and dust separation system consists of three or four sections: first section in the form of a settling chamber, second section in the form of a hot gas cooler, third section being a cold gas cooler, and fourth section in the form of a fabric filter (bag, plate or other type). Crude oxides accumulate in the cooling and dust separation system, the chemical composition and properties of said oxides depending on the location of the sampling point. The oxide taken from the fabric filter proved to be most appropriate for the hydrometallurgical process. Hydrometallurgical processing of oxides taken from a filter is simpler, less costly and provides high purity oxides and zinc sulphate solutions derived therefrom.

The Polish patent application P-396508 discloses a method of obtaining a zinc electrolyte for electrolytic zinc manufacture in three counter-current stages. In the first stage the dust is pre-treated (dust pre-leaching) using solutions from the second stage, with the application of two-step counter-current thickening method; at this stage phase separation is effected by sedimentation and filtration in a dehydrating apparatus, the latter in the form of a vacuum filter, and the filter cake is washed with water on the filter. The filtrate and the spent washing solution are recycled to the counter-current thickening operation. The second stage consists in deep purification of the dust pre-treated in the first stage (pressure leaching), which is carried out in an autoclave at 120-130°C with sodium carbonate added in an amount of 8-16% in relation to the weight of dust, and followed by phase separation on a dehydrating apparatus with washing with hot water on a filter; a portion of the spent washing solution is recycled for treatment in the previous stage. In the third stage the filter cake obtained in the second stage is dissolved in spent electrolyte, in a thickening and sedimentation process and phase separation on a dehydrating apparatus with washing with water on a filter, the result of which is the final product in the form of a neutral zinc electrolyte for the manufacture of electrolytic zinc, the electrolyte having low content of chlorine (<250 mg/dm³) and fluorine (<20 mg/dm³), and a leaching residue in the form of lead concentrate.

The Polish patent PL210033 teaches of a hydrometallurgical method of purifying crude oxides derived from dust treatment in the Waelz process, particularly steel-making dust, according to which the treatment of crude oxides is effected in two stages. The first stage comprises pre-treatment by means of final solution recycled from the second stage, whereas the second stage comprises deep purification using Na₂CO₃ and/or Na₂CO₃ solution and/or NaOH and/or NaOH solution at a temperature of not less than 95°C, for 1 - 6 hours, at atmospheric pressure, preferably by feeding live steam directly into the reactor, and the final solution after the second stage of deep dechlorination is recycled to the first stage of preliminary dechlorination. In the first stage of treatment the crude oxides, preferably mixed with water, are mixed with recycled solution and optionally with the addition of pure Na₂CO₃ and/or NaOH, and the suspension obtained is separated gravitationally, and afterwards the concentrated suspension is separated by filtration or by centrifuging or by vacuum filtration into a sludge and waste solutions. The waste solutions are rejected from the process, whereas the sludge separated from the solutions is transferred to the second stage of treatment. In the second stage the sludge is mixed with Na₂CO₃ and/or Na₂CO₃ solution and/or NaOH and/or NaOH solution, added in an amount of 4 to 20 wt.% in relation to the weight of sludge, wherein mixing is carried out at solids to liquid ratio of 100 to 400 g of solids per 1 dm³ of solution. The solution obtained is preferably decanted, afterwards the concentrated suspension is filtered, the filter cake is washed with water to form a purified oxide product of low chlorine and fluorine content, whereas the supernatant from decantation, filtrate and spent washing solution form the final recycled solution which is transferred to the first stage of treatment. Zinc borne in the dust from electric arc furnaces is reduced in the Waelz process at a temperature reaching up to 1250°C in a CO-CO₂ atmosphere. Reduced zinc, having a low boiling temperature (917°C) vaporizes and is oxidized by oxygen from air drawn into the furnace. The dust formed comprises zinc oxide that contains ca. 60% Zn and impurities, such as: Cl, F, Fe, SiO₂ and Cₜₒₜ. Zinc oxide leaving the furnace together with furnace flue gas enters the dust removal system, where it settles in cold and hot coolers and is filtered off in a fabric filter. Tests show that the chemical composition, and consequently the physicochemical properties of the deposited oxide, depend on the place of deposition. Such properties include removability of fluorine, which property is an advantage in hydrometallurgy. Zinc oxides, depending on the place of deposition, contain defined amounts of chlorine and fluorine, whereas the mutual relationship of the content of these elements is inversely proportional, which means that the higher the chlorine content is, the lower is the fluorine content. Chlorine can in practice be readily removed from the oxides, whereas fluorine is difficult to remove. That depends on the phase form under which it occurs. The oxide fed to the fluorine removal system should contain no more than 0.20% F.

The Korean patent KR101186170 dicloses the method for recovering zinc oxide from steel dust produced from a steelmaking process to maximize the reaction amount and speed by increasing the specific surface of steel dust, thereby obtaining zinc sulfate leachate with high recovery rate and high purity. The method for recovering zinc oxide from steel dust produced from a steelmaking process comprises the following steps: pulverizing washed dust in a wet-type ball mill for 15-20 hours into ultrafine particles having an average particle size of 5-8 micron meters; adding 2.7N sulfuric acid solution to the ultrafine particles, performing zinc leaching reaction for 30-60 minutes, and finishing the leaching reaction at a range of pH5-5.5 to obtain zinc sulfate solution; adding sodium carbonate into the zinc sulfate solution to obtain zinc carbonate precipitate; filtering the zinc carbonate precipitate to obtain zinc carbonate; and clacinating the zinc carbonate at high temperatures to separate zinc oxide.

The Japanese patent application JPH07126013 discloses a treatment of chlorides in crude zinc oxide. The chlorides are leached out into water, sodium hydroxide and sodium carbonate are added to precipitate the valuable metals in the chlorides in the form of basic carbonates. The basic carbonates separated are dissolved in nitric acid and the solution is filtered. The copper in the filtrate is solvent-extracted into the organic phase. The organic phase containing copper is subjected to back extraction with dilute sulfuric acid to turn back the copper into the aqueous phase. The aqueous phase is concentrated to recover the copper in the form of copper sulfate. The zinc remaining in the aqueous phase after copper extraction is solvent-extracted into the organic phase. The organic phase is back-extracted with dilute sulfuric acid to turn back the zinc into the aqueous phase, which is concentrated to recover the zinc in the form of zinc sulfate. The lead remaining in the aqueous phase after extraction of copper and zinc is recovered in the form of crystallized lead sulfate by concentration under reduced pressure.To recovery copper, zinc and lead from the chlorides in crude zinc oxide.

The Japanese patent application JPS5282628 discloses a method of treating zinc sludge where the zinc residue is contacted with a dilute alkaline solution at a pH of 6 to 12, and at the same time, 0.03 to 20% of a surfactant is added to the zinc residue to cause anti-L6 at 30'C or higher. A method for treating zinc slag is characterized by increasing the bathing rate of impure components such as chlorine and fluorine contained therein and improving the powder physical properties of zinc slag in the treatment layer.

The method of obtaining a zinc electrolyte for electrolytic zinc manufacture according to the invention comprises a comprehensive method of processing crude zinc oxide in three stages. In the first stage the selected oxide of hydrometallurgical properties is treated in a tank reactor to form a suspension. The suspension is obtained from fresh water at 12-14°C and from the selected oxide. Density of the suspension is an important factor in efficient removal of chlorine from the oxide and it should be in the range of 400 to 600 g of solids in a litre of aqueous suspension. The next operation in the first stage is a two-step counter-current washing of the oxide in the process of suspension thickening; at this stage phase separation is effected by sedimentation, decantation and filtration in a dehydrating apparatus, the latter in the form of a vacuum filter, with filter cake washed with water. The filtrate and spent washing solution is recycled to the counter-current washing operation or to slurry preparation mixing tank. The supernatants, filtrates and spent washing solutions contain only chlorine and alkali elements, as fluorine is not leached into the solution under these conditions, which makes the solutions adequate for CaCl₂ production. This stage is called dechlorination of crude zinc oxide. The second stage comprises removal of fluorine from the dechlorinated oxide obtained in the first stage. Pressure washing, which is carried out in an autoclave at 120-130°C with sodium carbonate added in an amount of 6-20% in relation to the weight of oxides, is completed by phase separation on a dehydrating apparatus with hot water washing on the filter. Solutions from filtration are transferred to an industrial wastewater treatment plant. The use of hydrostatic apparatus other than an autoclave results only in the extension of process duration with no effect on leaching efficiency. Autoclave in this case expedites the process of fluorine removal. The high content of fluorine and absence of chlorine in wastewater enables the use of the filtrates mentioned in the manufacture of MgF₂, CaF₂ (if necessary). The second stage differs from the first stage in the temperature of the process, in the density of the suspension prepared and in the composition of the washing solution, and the relationship is opposite: the lower the suspension density, the more efficient is fluorine removal. In practice the density of the suspension for the second stage cannot exceed 150 g of solids in a litre of sodium carbonate aqueous solution. The concentration of the carbonate aqueous solution should be in the range of 3 to 5%. The washing of the filter cake during vacuum filtration is an important step of the second stage. The filter cake on a belt vacuum filter is washed with hot water, at a temperature of at least 80°C, in a counter-current mode, meaning that fresh water is fed at the end of the washing zone, and the filtrate is fed to the initial washing zone, wherein it is preferable to have at least three washing zones.
In the third stage the filter cake obtained in the second stage is dissolved in spent electrolyte where dissolution, sedimentation and phase separation on a dehydrating apparatus with washing with water on a filter take place, the result of which is the final product, in the form of an acidic zinc electrolyte of low content of chlorine (<300 mg/dm3) and fluorine (<30 mg/dm³) for the manufacture of electrolytic zinc, and a leaching residue in the form of lead concentrate. The efficiency of the process described depends not only on the efficiency of impurity removal in the autoclave with the use of Na₂CO₃, but also on the type of zinc oxide used (selected or unselected), on preparatory process conditions (preparation of suspensions and washing solutions), on auxiliary processes (sedimentation, filtration and filter cake washing). Physicochemical properties of zinc oxides taken from various locations in the manufacturing plant are shown in Table 1 presenting the analytical limits, and in Table 2 presenting mean values.
An embodiment of the invention is presented in a drawing depicting
a flowsheet of a plant for hydrometallurgical preparation of zinc sulphate solution for electrolysis of zinc from selected Waelz oxide of hydrometallurgical properties, the flowsheet schematically illustrating the flow of solutions in the process of obtaining zinc electrolyte for electrolytic zinc manufacture. The flow rates (m³/h) given in the example apply to the flow of solution.

Stage 1. Dechlorination reactor for suspension preparation **1** with an operating capacity of 3 m³ and continuous operation, fitted with a stirrer, was fed with 1000 kg/h of dust of the following composition: Zn 60%; Cl 6%; F 0.2%; K 3.23%; Na 3.1%; Pb 6% and 2.63 m³/h fresh water. After retention time of 0.5-1 hour the suspension, having a mean density of 430 kg/m³, was fed to a first thickener of the washing and thickening unit **2** with an operating capacity of 3 m³ and continuous operation, the said unit being also fed with clarified solution from a second thickener in an amount of 1.69 m³/h, and with 0.05 m³/h of flocculant, to obtain a suspension of a density at the bottom of the first thickener of unit **2** of 1015 kg/m³ in an amount of 0.99 m³/h and a clarified solution with a mean chlorine content of 19.26 kg/m³ and mean fluorine content of 0.01 kg/m³ in an amount of 3.06 m³/h, the said suspension being removed from the process and transferred to a wastewater treatment plant or to CaF₂ manufacture. The suspension from the first thickener of unit **2** was fed at a rate of 0.99 m³/h to the second thickener - a mixing tank with an operating capacity of 3 m³ and continuous operation, which was also fed with a filtrate from drum vacuum filter **3** at a rate of 1.63 m³/h and with flocculant at a rate of 0.06 m³/h, to obtain 0.99 m³/h of a suspension of a density of 1015 kg/m³ and 1.69 m³/h of a clarified solution, the said solution being recycled to the thickener of unit **2.** The thickened suspension was fed to a continuous operation drum vacuum filter **3**, where the filter cake was also washed with water. The washing water was fed at a rate of 1 m³/h, whereas the filtrate and the spent washing solution in a total amount of 1.63 m³/h were transferred to the second thickener **2.** The filtered product, having a moisture content of 35% and mean chlorine content of 0.02% and mean fluorine content of 0.02% was repulped in second stage suspension preparation reactor **1'** with sodium carbonate solution with a concentration of 4.8 m³/h (which corresponds to 10% of sodium carbonate by weight in relation to the weight of dust 232 kg/m³), to obtain 5.15 m³/h of a suspension of a mean density of 150 kg/m³. The reactor **1'** was also fed with live steam at a rate of 0.17 m³/h to obtain 0.43 m³/h of suspension at a temperature of 90°C; this suspension was subsequently fed at a rate of 5.75 m³/h to a four-chamber autoclave **4** with an operating capacity of 5 m³ along with steam at a rate of 0.54 m³/h to reach the temperature of 125°C. The density of the suspension in the reactor was ca. 150 kg/m³, which ensured the proper course of deep fluoride dissolution. The retention time of suspension in autoclave **4** was one to two hours. After pressure reduction the obtained suspension was fed to continuous operation vacuum filter **3'**. The rate of suspension feeding to the filter was 5.29 m³/h. The filter cake thus obtained was washed with 2.14 m³/h hot water and two filtration products were obtained: 5.64 m³/h of filtrate with mean fluorine content of 0.42 kg/m³, which was subsequently processed to remove fluorine (or to produce CaF₂), and dechlorinated and defluorinated crude zinc oxide in the form of filter cake with moisture content of 35%, total chlorine content <0.01% and total fluorine content <0.01 %, soluble chlorine and fluorine content <0.0047% and <0.0031 %, respectively, which was transferred to the next, third stage, consisting in dissolution in spent electrolyte. The suspension was prepared for dissolution in continuous operation acidic leaching reactor **1'** fitted with a stirrer. Acidic leaching reactor **5"** was fed with 0.74 m³/h suspension prepared from 0.49 m³/h filtration product and 0.25 m³/h process water, and with 5.75 m³/h spent electrolyte with zinc concentration of 50.5 kg/m³, and was heated with 0.32 m³/h live steam to obtain 6.81 m³/h suspension, which was fed to thickener **3"**. The thickener **3"** with a capacity of 7.5 m³ was fed with 0.01 m³/h flocculant and
0.72 m³/h filtrate from filtration to obtain, after retention time of one hour, 7.09 m³/h of clarified electrolyte with mean Zn content 120 kg/m³, Cl content 245 mg/dm³ and F content 18.4 mg/dm³, and 0.45 m³/h of thickened PbSO₄ suspension, which was fed to filter **3"**, where phases were separated and the filter cake was washed with 0.31 m³/h water. The filtrate from filtration and spent washing solution in a total amount of 0.72 m³/h were transferred to thickener **3"**. The products of the process included 7.09 m³/h of basic solution for electrolytic zinc manufacture with zinc concentration of 120 kg/m³, and 0.147 t/h (dry matter) lead sulphate solution with moisture content of 25%, and 6.69 m³/h of waste solution removed from the process with mean chlorine content of 8.96 kg/m³, fluorine content 0.3 kg/m³, potassium content 3.83 kg/m³ and sodium content 11.12 kg/m³.

**Table 1. Results of analyses of zinc oxides taken from various locations in the manufacturing plant - analytical limits**

| ***Place of origin*** | | ***Cl*** | ***F*** | ***Fe*** | ***SiO₂*** | ***Cₜₒₜₐₗ*** |
|---|---|---|---|---|---|---|
| ***FILTER*** | ***Max.*** | 8.65 | 0.30 | 1.67 | 0.19 | 0.130 |
| | ***Min.*** | 6.19 | 0.15 | 0.40 | 0.04 | 0.040 |
| ***COLD COOLER*** | ***Max.*** | 5.98 | 0.46 | 5.75 | 0.99 | 0.240 |
| | ***Min.*** | 5.02 | 0.17 | 1.95 | 0.26 | 0.110 |
| ***HOT COOLER*** | ***Max.*** | 5.00 | 0.61 | 14.40 | 2.85 | 0.960 |
| | ***Min.*** | 1.76 | 0.26 | 5.98 | 0.68 | 0.120 |

**Table 2. Results of analyses of zinc oxides taken from various locations in the manufacturing plant - mean values**

| ***Mean oxide analysis results*** | ***Cl*** | ***F*** | ***Fe*** | ***SiO₂*** | ***Cₜₒₜₐₗ*** |
|---|---|---|---|---|---|
| ***FILTER*** | 7.60 | 0.21 | 0.93 | 0.11 | 0.087 |
| ***COLD COOLER*** | 5.62 | 0.37 | 4.09 | 0.48 | 0.160 |
| ***HOT COOLER*** | 3.85 | 0.44 | 9.71 | 1.83 | 0.396 |

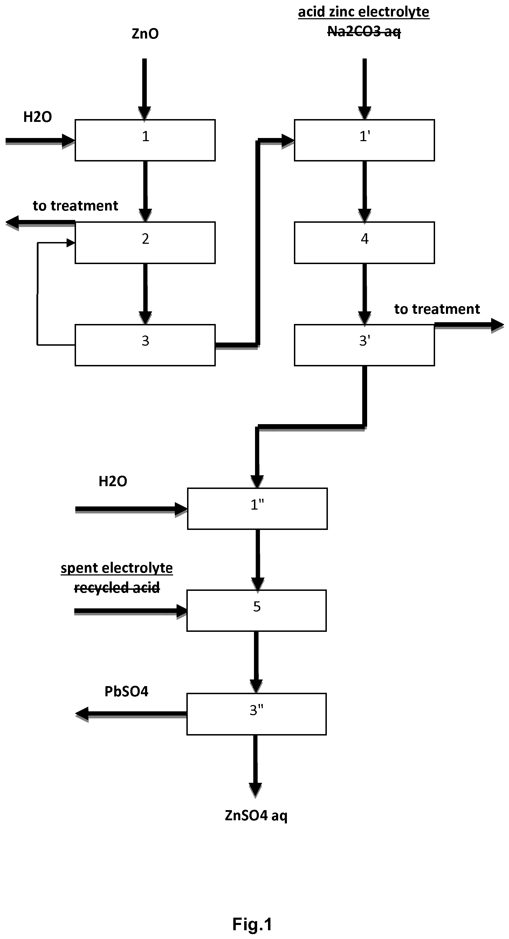

## Claims

1. Method of obtaining zinc sulphate solution for electrolysis of zinc from selected Waelz oxide of hydrometallurgical properties, with the application of purification by means of sodium carbonate solution at atmospheric or elevated pressure in an autoclave, **characterised in that** selected oxides of hydrometallurgical properties from the Waelz plant are used in the process, and the process of preparing zinc electrolyte for electrolytic zinc manufacture is carried out in three stages, wherein each of the stages is preceded by a different process of preparing process suspension, in the first stage the crude zinc oxide being treated with cold water to remove chlorine and alkali elements in a two-step counter-current operation of leaching soluble components carried out in a washing and thickening unit, wherefrom water containing alkali elements and chlorine is selectively transferred to CaCl2 manufacture, in the second stage the crude zinc oxide processed in the first stage being further treated in an autoclave at a temperature of 120-130°C to remove fluorine by treatment with Na₂CO₃ and/or Na₂CO₃ solution, after which the suspension, preferably upon thickening, is subjected to phase separation by means of filtration and washing the filter cake on the filter, in the third stage the filter cake obtained in the second stage being dissolved in the spent electrolyte after which the thickened suspension is separated in a thickening and phase separation process by means of filtration and washing the filter cake on the filter, and the solution after sedimentation constituting a zinc electrolyte for electrolytic zinc manufacture, wherein solutions from the second step are transferred to selective purification to separate CaF2.

2. Method according to claim 1, **characterised in that** in each of the basic stages of zinc electrolyte preparation a suspension of different density is used, so that for the first stage the density of the oxide suspension should be at least 400 g/l, maximum 800 g/l, preferably 600 g/l, for the second stage maximum 150 g/l, minimum 50 g/l, preferably 100 g/l, and for the third stage from 100 to 200 g/l, preferably 150 g/l.

3. Method according to claim 1, **characterised in that** in each stage a different washing solution is used, in the first stage the washing solution being fresh water at a temperature of 12-16°C, preferably 14°C, in the second stage a solution of sodium carbonate at a temperature of 80°C, and in the third stage a spent electrolyte at a temperature of above 35°C, preferably 60°C.

4. Method according to claim 1, **characterised in that** wastewater in the form of chlorine- and/or fluorine-containing supernatant solutions or filtrates from filtration devices are separated in order to process it selectively or subject it to further treatment.

5. Method according to claim 1, **characterised in that** the suspension obtained after the second stage of treatment carried out in an autoclave, is subjected to phase separation by means of filtration, preferably vacuum filtration with simultaneous counter-current hot water washing of the filter cake on the filter.

6. Method according to claim 1, **characterised in that** the suspension after preliminary dechlorination is subjected to a two-step counter-current leaching of soluble components in a set of two thickeners followed by filtration of the thickened suspension, preferably in a vacuum filter with simultaneous washing of the filter cake on the filter with water, wherein the solution after filtration and the spent washing solution are transferred to the suspension preparation operation or to a thickener, and the decanted solution form that thickener is fed to a second thickener along with a flocculant, and the clarified solution constituting a waste solution is removed from the process to be subjected to selective treatment.

7. Method according to claim 1, **characterised in that** the suspension obtained after the third stage is separated in a sedimentation process followed by filtration with simultaneous washing of the filter cake on the filter with fresh water, and the solution after filtration and washing is transferred with added flocculant to a thickener, the thus clarified solution constituting a zinc electrolyte for electrolytic zinc manufacture.

## Patentansprüche

1. Verfahren zur Gewinnung von Zinksulfatlösung für die Elektrolyse von Zink aus ausgewähltem Waelz-Oxid mit hydrometallurgischen Eigenschaften unter Anwendung der Reinigung mittels Natriumcarbonatlösung bei atmosphärischem oder erhöhtem Druck in einem Autoklaven, **dadurch gekennzeichnet, dass** bei dem Verfahren ausgewählte Oxide mit hydrometallurgischen Eigenschaften aus dem Waelz-Werk verwendet werden und das Verfahren zur Herstellung von Zinkelektrolyt für die elektrolytische Zinkherstellung in drei Stufen durchgeführt wird, wobei jeder der Stufen ein anderes Verfahren zur Herstellung der Prozesssuspension vorausgeht, wobei in der ersten Stufe das Rohzinkoxid mit kaltem Wasser behandelt wird, um Chlor und Alkalielemente in einem zweistufigen Gegenstromverfahren der Auslaugung löslicher Bestandteile zu entfernen, das in einer Wasch- und Eindickungseinheit durchgeführt wird, woraus das Wasser, das Alkalielemente und Chlor enthält, selektiv zur CaCI2-Herstellung überführt wird, in der zweiten Stufe das in der ersten Stufe verarbeitete Rohzinkoxid in einem Autoklaven bei einer Temperatur von 120-130°C zur Entfernung von Fluor durch Behandlung mit Na2C03 und/oder Na2C03-Lösung weiterbehandelt wird, wonach die Suspension, vorzugsweise nach Eindickung, einer Phasentrennung mittels Filtration und Waschen des Filterkuchens auf dem Filter unterzogen wird, in der dritten Stufe der in der zweiten Stufe erhaltene Filterkuchen in dem verbrauchten Elektrolyten gelöst wird, wonach die eingedickte Suspension in einem Eindickungs- und Phasentrennverfahren mittels Filtration und Waschen des Filterkuchens auf dem Filter getrennt wird und die Lösung nach der Sedimentation einen Zinkelektrolyten für die elektrolytische Zinkherstellung bildet, wobei Lösungen aus der zweiten Stufe einer selektiven Reinigung zur Abtrennung von CaF2 zugeführt werden.

2. Verfahren nach Anspruch 1, **dadurch gekennzeichnet, dass** in jeder der Grundstufen der Zinkelektrolytherstellung eine Suspension unterschiedlicher Dichte verwendet wird, so dass für die erste Stufe die Dichte der Oxidsuspension mindestens 400 g/l, maximal 800 g/l, vorzugsweise 600 g/l, für die zweite Stufe maximal 150 g/l, mindestens 50 g/l, vorzugsweise 100 g/l, und für die dritte Stufe von 100 bis 200 g/l, vorzugsweise 150 g/l, betragen soll.

3. Verfahren nach Anspruch 1, **dadurch gekennzeichnet, dass** in jeder Stufe eine andere Waschlösung verwendet wird, wobei in der ersten Stufe die Waschlösung Frischwasser mit einer Temperatur von 12-16°C, vorzugsweise 14°C, in der zweiten Stufe eine Lösung von Natriumcarbonat mit einer Temperatur von 80°C und in der dritten Stufe ein verbrauchter Elektrolyt mit einer Temperatur von über 35°C, vorzugsweise 60°C, ist.

4. Verfahren nach Anspruch 1, **dadurch gekennzeichnet, dass** Abwasser in Form von chlor- und/oder fluorhaltigen überstehenden Lösungen oder Filtraten aus Filtrationseinrichtungen abgetrennt wird, um es selektiv aufzubereiten oder einer weiteren Behandlung zu unterziehen.

5. Verfahren nach Anspruch 1, **dadurch gekennzeichnet, dass** die nach der zweiten, in einem Autoklaven durchgeführten Behandlungsstufe erhaltene Suspension einer Phasentrennung durch Filtration, vorzugsweise Vakuumfiltration mit gleichzeitiger Heißwasser-Gegenstromwäsche des Filterkuchens auf dem Filter, unterzogen wird.

6. Verfahren nach Anspruch 1, **dadurch gekennzeichnet, dass** die Suspension nach der vorläufigen Entchlorung einer zweistufigen Gegenstromauslaugung von löslichen Bestandteilen in einem Satz von zwei Eindickern unterzogen wird, gefolgt von einer Filtration der eingedickten Suspension, vorzugsweise in einem Vakuumfilter mit gleichzeitigem Waschen des Filterkuchens auf dem Filter mit Wasser, wobei die Lösung nach der Filtration und die verbrauchte Waschlösung in den Suspensionsaufbereitungsbetrieb oder in einen Verdicker überführt werden und die dekantierte Lösung aus diesem Verdicker zusammen mit einem Flockungsmittel einem zweiten Verdicker zugeführt wird und die geklärte Lösung, die eine Abfalllösung darstellt, aus dem Verfahren entfernt wird, um sie einer selektiven Behandlung zu unterziehen.

7. Verfahren nach Anspruch 1, **dadurch gekennzeichnet, dass** die nach der dritten Stufe erhaltene Suspension in einem Sedimentationsprozess mit anschließender Filtration unter gleichzeitiger Wäsche des Filterkuchens auf dem Filter mit Frischwasser abgetrennt wird und die Lösung nach Filtration und Wäsche mit zugesetztem Flockungsmittel in einen Eindicker überführt wird, wobei die so geklärte Lösung einen Zinkelektrolyten zur elektrolytischen Zinkherstellung darstellt.

## Revendications

1. Procédé d'obtention d'une solution de sulfate de zinc pour l'électrolyse du zinc à partir d'oxyde de Waelz sélectionné de propriétés hydrométallurgiques, avec application d'une purification au moyen d'une solution de carbonate de sodium à pression atmosphérique ou élevée dans un autoclave, **caractérisé en ce que** certains oxydes de propriétés hydrométallurgiques de l'usine de Waelz sont utilisés dans le processus, et le processus de préparation de l'électrolyte de zinc pour la fabrication électrolytique de zinc est effectué en trois étapes, chacune des étapes étant précédée d'un processus différent de préparation de la suspension de processus, dans la première étape, l'oxyde de zinc brut étant traité avec de l'eau froide pour éliminer le chlore et les éléments alcalins dans une opération à contre-courant en deux étapes de lixiviation des composants solubles effectuée dans une unité de lavage et d'épaississement, à partir de laquelle l'eau contenant des éléments alcalins et du chlore est sélectivement transférée à la fabrication de CaCI2, dans la deuxième étape le l'oxyde de zinc brut traité au cours de la première étape est ensuite traité dans un autoclave à une température de 120-130°C pour éliminer le fluor par traitement avec une solution de Na2CO3 et/ou Na2CO3, après quoi la suspension, de préférence lors de l'épaississement, est soumise à une séparation de phase au moyen d'une filtration et d'un lavage du gâteau de filtration sur le filtre, dans la troisième étape, le gâteau de filtration obtenu dans la deuxième étape étant dissous dans l'électrolyte usé, après quoi la suspension épaissie est séparée dans un processus d'épaississement et de séparation de phase au moyen de filtration et de lavage du gâteau de filtration sur le filtre, et le solution après sédimentation constituant un électrolyte de zinc pour la fabrication électrolytique de zinc, dans laquelle les solutions de la deuxième étape sont transférées à une purification sélective pour séparer CaF2.

2. Procédé selon la revendication 1, **caractérisé en ce que** dans chacune des étapes de base de la préparation d'électrolyte de zinc, une suspension de densité différente est utilisée, de sorte que pour la première étape la densité de la suspension d'oxyde doit être d'au moins 400 g/l, maximum 800 g/l, de préférence 600 g/l, pour la deuxième étape maximum 150 g/l, minimum 50 g/l, de préférence 100 g/l, et pour la troisième étape de 100 à 200 g/l, de préférence 150 g/l.

3. Procédé selon la revendication 1, **caractérisé en ce que** dans chaque étape une solution de lavage différente est utilisée, dans la première étape la solution de lavage étant de l'eau douce à une température de 12-16°C, de préférence 14°C, dans la deuxième étape une solution de carbonate de sodium à une température de 80°C, et dans la troisième étape un électrolyte usé à une température supérieure à 35°C, de préférence 60°C.

4. Procédé selon la revendication 1, **caractérisé en ce que** les eaux usées sous forme de solutions surnageantes chlorées et/ou fluorées ou de filtrats provenant de dispositifs de filtration sont séparées pour les traiter sélectivement ou les soumettre à un traitement supplémentaire.

5. Procédé selon la revendication 1, **caractérisé en ce que** la suspension obtenue après la deuxième étape de traitement réalisée en autoclave, est soumise à une séparation de phases par filtration, de préférence filtration sous vide avec lavage simultané à l'eau chaude à contre-courant du gâteau de filtration sur le filtre.

6. Procédé selon la revendication 1, **caractérisé en ce que** la suspension après déchloration préliminaire est soumise à une lixiviation à contre-courant en deux étapes de composants solubles dans un ensemble de deux épaississants suivie d'une filtration de la suspension épaissie, de préférence dans un filtre à vide avec lavage simultané. du gâteau de filtration sur le filtre avec de l'eau, dans lequel la solution après filtration et la solution de lavage usée sont transférées à l'opération de préparation de la suspension ou à un épaississant, et la solution décantée de cet épaississant est introduite dans un deuxième épaississant avec un floculant, et la solution clarifiée constituant une solution de déchets est retirée du procédé pour être soumise à un traitement sélectif.

7. Procédé selon la revendication 11, **caractérisé en ce que** la suspension obtenue après la troisième étape est séparée dans un processus de sédimentation suivi d'une filtration avec lavage simultané du gâteau de filtration sur le filtre avec de l'eau fraîche, et la solution après filtration et lavage est transférée avec addition floculant à un épaississant, la solution ainsi clarifiée constituant un électrolyte de zinc pour la fabrication électrolytique de zinc.
